# EUROPÄISCHE PATENTSCHRIFT

(11) **EP 1 629 149 B1**
(45) Veröffentlichungstag und Bekanntmachung des Hinweises auf die Patenterteilung: **23.09.2009**
(21) Anmeldenummer: 04735216.6
(22) Anmeldetag: 28.05.2004
(51) Int. Cl.: D06M 15/277, D06M 15/564, C08L 33/16

(54) **ZUBEREITUNGEN FÜR DIE ÖL- UND WASSERABWEISENDE AUSRÜSTUNG VON FLÄCHENGEBILDEN UND DEREN ANWENDUNG**
PREPARATIONS FOR MAKING PLANAR STRUCTURES OIL-REPELLENT AND WATER-REPELLENT, AND USE THEREOF
PREPARATIONS POUR L'APPRET OLEOFUGE ET HYDROFUGE DE STRUCTURES ET LEUR UTILISATION

(30) Priorität: 03.06.2003 DE 10325094
(43) Veröffentlichungstag der Anmeldung: 01.03.2006
(73) Patentinhaber: Rudolf GmbH, 82538 Geretsried (DE)
(72) Erfinder: SANDNER, Bernhard, 82538 Geretsried (DE); DUSCHEK, Gunther, 83671 Benediktbeuren (DE)
(74) Vertreter: Zumstein, Angela
(86) Internationale Anmeldenummer: PCT/EP2004/005783
(87) Internationale Veröffentlichungsnummer: WO 2004/106623

(56) Entgegenhaltungen:
- EP-A- 0 429 983
- EP-A- 0 490 150
- EP-A- 0 537 578
- EP-A- 0 872 503

## Beschreibung

Die Erfindung betrifft Zubereitungen (Zu) auf Basis von Wasser und/oder organischen Lösemitteln und deren Anwendung als Appretur auf Flächengebilden. Bei der Anwendung verleihen die Zubereitungen den behandelten Flächengebilden dauerhafte öl- und wasserabweisende Eigenschaften sowie weichen Warengriff.

Es ist bekannt, dass zum Appretieren von Flächengebilden Zubereitungen auf wässriger Basis oder Lösemittelbasis aus Silikonölen, Paraffinen, Fluorcarbonpolymeren (Fluorcarbon wird im folgenden mit FC abgekürzt) und anderen Additiven verwendet werden, welche dem appretierten Flächengebilde hydrophobe Effekte verleihen, um den Beanspruchungen gegenüber Regen, Spritzwasser oder Feuchtigkeit während des Gebrauchs des Flächengebildes gerecht zu werden. So werden beispielsweise Zeltgewebe mit wässrigen Emulsionen aus Paraffinen, Metallseifen sowie Kieselsäuresalzen polyvalenter Metalle behandelt, um die textile Oberfläche undurchlässig gegenüber Regen oder Spritzwasser zu machen.

All diesen Anwendungen ist gemein, dass die Flächengebilde nach ihrer Behandlung mit den genannten Chemikalien nicht gewaschen oder durch andere Reinigungsmaßnahmen von allfälligen Verschmutzungen befreit werden können. Sofern jedoch substratabhängig Reinigungsprozesse notwendig sind, ist dabei stets eine drastische Verschlechterung der wasserabweisenden Eigenschaften festzustellen. Durch Auffrischung der Wasserabweisung mittels Nachbehandlung mit geeigneten Hydrophobiermitteln kann dieser Nachteil teilweise ausgeglichen werden, wobei meist Chemikalien auf gleicher oder ähnlicher chemischer Basis wie bei der Erstappretur Verwendung finden.

Auf den modernen Geweben, insbesondere auf solchen aus synthetischen Materialien, wird die Öl- und Wasserabweisung durch Verwendung von FC-Polymeren auf wässriger oder Lösemittelbasis erzeugt. So beschreibt beispielsweise die EP-A- 0 325 918 Zubereitungen, welche aus modifizierten, perfluoraliphatische Gruppen enthaltenden Polyurethanen bestehen und mit welchen gute Öl- und Wasserabweisung auf textilen Substraten bei gleichzeitig gutem Weichgriff sowie befriedigender Waschbeständigkeit erzielt werden kann. In der EP-A-314 944 werden Formulierungen von FC-Polymeren unter Mitverwendung von Polyethylen und modifizierten Polysiloxanen empfohlen, bei welchen ein besonders oberflächenglatter, weicher Griff hervorgehoben wird.

WO 99/14422 A1 beschreibt Zubereitungen für Fasermaterialien, die neben FC-Verbindungen einen blockierten Isocyanatextender enthalten, welcher ein Umsetzungsprodukt aus einem Polyisocyanat, einem Diol und einem Isocyanatblockierungsmittel ist. Dieser blockierte Isocyanatextender ist strukturell von der anspruchsgemäßen Komponente (2) verschieden.

EP 429983 A2 beschreibt eine Zusammensetzung auf Basis eines Perfluoralkylgruppen enthaltenden Polymers und eines Extenders auf Basis eines kationisch modifizierten Polyurethans, welches strukturell von der anspruchsgemäßen Komponente (2) verschieden ist.

Aufgrund der mit FC-Formulierungen zu erreichenden Waschbeständigkeiten von öl- und wasserabweisenden Effekten bei gleichzeitig gutem Warengriff werden heute derartige Verbindungen insbesondere für die Anwendung auf synthetischen Flächengebilden als geeignete Produkte für das zu erreichende Ziel betrachtet. Nachteilig ist bei den Zubereitungen auf FC-Polymerbasis der relativ hohe Preis, welcher durch zahlreiche, teilweise energieaufwändige Synthesestufen bedingt ist.

Trotz des insgesamt guten Gesamteffektniveaus der FC-Polymere ist zu erwähnen, dass nach Waschprozessen die öl- und wasserabweisende Wirkung aufgrund der Desorientierung der aktiven FC-Reste an den Polymermolekülen stark reduziert wird, sofern nicht durch thermische Behandlung eine Reorientierung stattfinden kann. Dies bedeutet, dass solcherart behandelte Flächengebilde nach einer Wäsche einer Hitzebehandlung bedürfen, um die gewünschten Effekte zu revitalisieren. So ist beispielsweise ein Bügeln oder mindestens ein Trocknen im Tumbler bei Temperaturen >80°C Voraussetzung für gute Regenerierung der Phobiereigenschaften.

Es war Aufgabe der vorliegenden Erfindung, Zubereitungen herzustellen, welche auf Flächengebilden dauerhafte öl- und wasserabweisende Eigenschaften unter guter Ausnutzung der Wirkung von FC-Polymeren, sowie weichen Warengriff erzeugen und welche wegen dieser guten Wirkungsausnutzung kommerzielle Vorteile gegenüber den gemäß des Standes der Technik bekannten Ausrüstungen mit FC-Polymeren ergeben. Gleichzeitig sollte die Zubereitung lagerstabil sein und möglichst wenig emissionsfähige Bestandteile, insbesondere keinen latent abspaltbaren Formaldehyd enthalten.

Des weiteren wurde an die zu entwickelnde Zubereitung die Aufgabe gestellt, auf Flächengebilden durch Nachbehandlung mit der Zubereitung eine durch Mehrfachwäschen nachlassende öl- und gegebenenfalls wasserabweisende Wirkung wieder ganz oder teilweise zu regenerieren.

Überraschenderweise konnte die Aufgabe durch die Verwendung von Zubereitungen gelöst werden, welche neben den aus dem Stand der Technik bekannten FC-Polymeren (Komponente (1)) eine Komponente (2), gegebenenfalls ein mit einer Schutzgruppe blockiertes Polyisocyanat (Komponente (3)) sowie bei wässrigen Zubereitungen die zur Emulgierung geeigneten Emulgatoren (Komponente (4)) enthalten. Die so erhaltenen Zubereitungen zeichnen sich durch überlegene öl- und wasserabweisende Eigenschaften mit hoher Waschpermanenz aus.

Durch die gute Ausnutzung der Wirkung der FC-Polymere wird hinsichtlich der öl- und wasserabweisenden Eigenschaften ein synergistischer Effekt ermöglicht, zu dessen Erzielung wesentlich geringere FC-Polymermengen benötigt werden, als mit herkömmlichen FC-Polymerzubereitungen.

Der erste Gegenstand der Erfindung sind nun Zubereitungen (Zu) auf Basis von Wasser und/oder organischen Lösemitteln, gekennzeichnet durch den Gehalt folgender Einzelkomponenten:
(1) 10 - 90 Gewichtsprozent eines fluorhaltigen öl- und wasserabweisenden Mittels,
(2) 10 - 80 Gewichtsprozent eines hydrophoben Umsetzungsproduktes (S), erhältlich durch Umsetzen einer Komponente (A) der Formel (I) 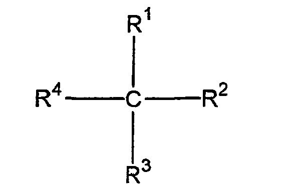 und/oder der Formel (II) 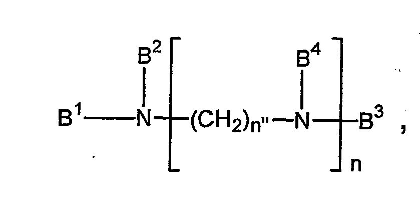 wobei R¹ ein hydrophober Rest der Bedeutung -X-Y-Z oder -Z ist, in
   welchem
   X =

   -(CH₂)_{n"}-,

   Y = 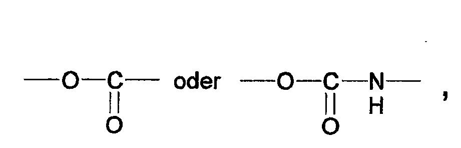 Z = -(CH₂)_{m'}-CH₃ bedeutet,
   R² ein Rest der Zusammensetzung 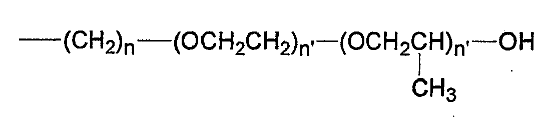 ist,
   R³ ein hydrophober Rest der Bedeutung -X-Y-Z, -Z oder -Y-Z ist, mit der Maßgabe, dass im Falle der Bedeutung -Y-Z dann im Rest R² n durch n" ersetzt ist,
   R⁴ ein Rest der Bedeutung X-Y-Z oder -(CH₂)_{n'}H ist,
   B¹ ein hydrophober Rest der Bedeutung -V-W-Z oder -Z ist, in welchem
   V = -(CH₂)ₙ"- oder 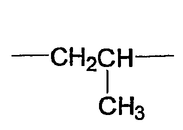 ist,
   W = 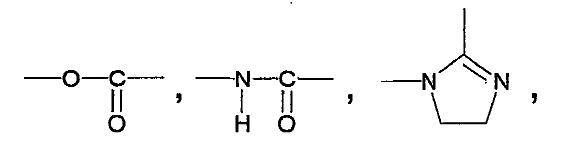 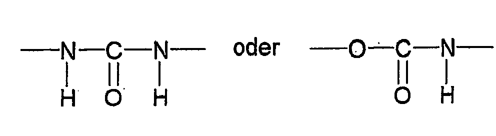 ist,
   B² = 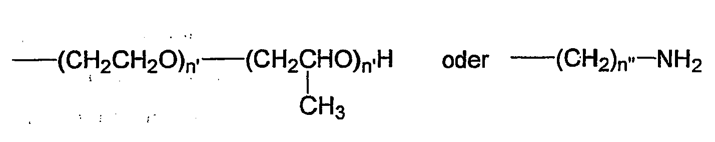 ist,
   B³ = ein hydrophober Rest der Bedeutung V-W-Z, -Z oder 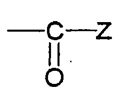 ist,
   B⁴ = V-W-Z oder 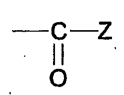 ist,
   n, n', n", m und m' ganze Zahlen der Bedeutung
   n = 0 - 2,
   n' = 0 - 4,
   n" = 1 - 4,
   m = 3 - 11, bevorzugt 5 - 9 und
   m' = 12 - 26, bevorzugt 14 - 22 sind,
   mit einem nicht blockierten oder teilblockierten Di-, Tri- oder Polyisocyanat (IC), wobei der Anteil an freien NCO-Gruppen zwischen 1,8 und 10 pro Mol liegt und das Verhältnis der freien NCO-Gruppen zu den reaktionsfähigen Gruppen der Verbindungen der Formeln (I) und/oder (II) 1 : 1 bis 1:1,3 ist,
(3) 0 - 45 Gewichtsprozent eines nicht blockierten oder blockierten Di-, Tri- oder Polyisocyanates und
(4) gegebenenfalls übliche Emulgatoren,
wobei die genannten Zubereitungen (Zu) frei von Wachsen und Wachsmischungen sind.

Bei der Anwendung als Appretur auf Flächengebilden verleihen die Zubereitungen den behandelten Flächengebilden dauerhafte öl- und wasserabweisende Eigenschaften sowie weichen Warengriff.

Sämtliche Prozentangaben der erfindungsgemäßen Zubereitungen beziehen sich auf die Gesamtzusammensetzung der Wirksubstanzen der erfindungsgemäßen Zubereitung und sind Gewichtsprozente. Als bevorzugte Bereiche sind für die Komponente (1) ein Bereich von 20 - 80 Gewichtsprozent, besonders bevorzugt von 25 - 65 Gewichtsprozent, für die Komponente (2) 20 - 80 Gewichtsprozent, insbesondere jedoch 30 - 70 Gewichtsprozent zu nennen. Sofern die Komponente (3) zugesetzt wird, liegt deren Konzentration bevorzugt im Bereich von 1 - 35 Gewichtsprozent, insbesondere im Bereich von 5 - 35 Gewichtsprozent. Die üblichen Anwendungsmengen der gegebenenfalls vorhandenen Emulgatoren (Komponente (4)) liegen vorzugsweise zwischen 4 und 25 Gewichtsprozent, insbesondere zwischen 5 und 15 Gewichtsprozent bezogen auf die summierten Aktivgehalte der verwendeten Komponenten (1), (2) und gegebenenfalls (3).

Komponente (1) der Zubereitung besteht aus einem fluorhaltigen öl- und wasserabweisenden Mittel, insbesondere aus FC-Polymeren. Derartige FC-Polymere sind dem Fachmann hinreichend bekannt und sind kommerziell als gebrauchsfertige Zubereitungen erhältlich. Die Herstellung der Komponente (1) erfolgt beispielsweise nach Methoden der Emulsionspolymerisation, wie sie bei Houben-Weyl in "Methoden der organischen Chemie", Band E20, S. 218-268 und S. 1150 ff. (1987) beschrieben sind. Im allgemeinen bestehen die Zubereitungen der Komponente (1) aus Emulsionen eines linearen Polymers mit perfluorierten Alkylseitenresten und werden gewöhnlich aus Perfluoralkylreste tragenden Monomeren mit copolymerisationsfähigen, fluorfreien Monomeren unterschiedlichen Typs hergestellt. Methoden zur Herstellung solcher Emulsionscopolymerisate sind beispielsweise in DE-A-2 939 549, US-A-3,544,537 sowie DE-A-2 358 647 beschrieben.

Geeignete Polymere mit perfluorierten Alkylseitenresten (Komponente (1)) werden beispielsweise durch Emulsionscopolymerisation von perfluorierte Alkylreste tragenden Monomeren, wie beispielsweise Perfluoroacrylat und/oder -methacrylat mit fluorfreien Monomeren, wie beispielsweise Butylacrylat, Stearylacrylat, Stearylmethacrylat, Acrylnitril, 2-Hydroxyethylacrylat, N-Methylolacrylamid, N-Methylolmethacrylamid oder Vinylidenchlorid erhalten.

Weitere marktübliche, als Komponente (1) verwendbare Mittel bestehen aus Emulsionen, welche als aktive FC-Komponente Polyurethane mit lateral angeordneten FC-Ketten aufweisen. Deren Herstellung erfolgt gewöhnlich gemäß den üblichen Methoden zur Polyurethansynthese durch Umsetzung von Diisocyanaten mit FC-gruppen enthaltenden Dialkoholen unter Zuhilfenahme von Katalysatorsystemen auf Basis organischer Zinnverbindungen und Aminen, wie beispielsweise einer Kombination von Dibutylzinndioctoat und Trimethylamin. Zur Verbesserung der Gesamteigenschaften werden häufig auch Comonomere, wie beispielsweise N-Methyldiethanolamin, in die Polyurethanpolymerkette eingebaut, um beispielsweise eine kationische Ladung des FC-Polymerkörpers zu erzeugen.

Bei der Herstellung der Komponente (1) können gegebenenfalls Solubilisierungsmittel, wie beispielsweise Ethylenglykol, 1,2-Propylenglykol, Dipropylenglykol, Dipropylenglykolmonomethylether, Mono- oder Diethylenglykolmonobutylether verwendet werden. In einem derartigen Fall können diese Solubilisierungsmittel in der erfindungsgemäßen Zubereitung (Zu) auch auf Basis von Wasser enthalten sein.

Die Komponente (2) besteht aus einem hydrophoben Umsetzungsprodukt (S), welches erhältlich ist durch Umsetzen einer anspruchsgemäßen Komponente (A) mit einem anspruchsgemäßen Di-, Tri- oder Polyisocyanat (IC). Die in dieser Komponente (2) als Komponente (A) eingesetzten Verbindungen der Formel (I) bestehen aus Umsetzungsprodukten von mehrwertigen Alkoholen (a1) mit Carbonsäuren (b1) oder mit Alkylisocyanaten (b2). Bevorzugte Beispiele für mehrwertige Alkohole (a1) sind Glyzerin, Trimethylolethan, Trimethylolpropan, 1,2,4-Butantriol, Pentaerythrit oder Zucker, wie zum Beispiel Glucose. Dabei sind Glyzerin, Trimethylolethan, Trimethylolpropan, 1,2,4-Butantriol und Pentaerythrit besonders bevorzugt.

Die in der Komponente (2) als Komponente (A) eingesetzten Verbindungen der Formel (II) bestehen aus Umsetzungsprodukten von Alkanolaminen (a2) und/oder Alkylaminen (a3) mit Carbonsäuren (b1) oder mit Alkylisocyanaten (b2). Beispiele für Alkanolamine (a2) sind 2-Amino-2,3-propandiol, 2-Amino-2-methyl-1,3-propandiol, Diethanolamin, Dipropanolamin, Diisopropanolamin, Ethanolpropanolamin, Triethanolamin, Triisopropanolamin, N,N,N',N'-Tetrakis(2-hydroxypropyl)ethylendiamin, Aminoethylethanolamin, Aminopropylethanolamin, Alkyltris(hydroxyethyl)propylendiamin und Alkyldihydroxyethylamin mit bevorzugt 12 - 24 Kohlenstoffatomen im Alkylrest, sowie deren Ethoxylierungsprodukte. Dabei sind Diethanolamin, Diisopropanolamin, Triethanolamin, Triisopropanolamin, Aminoethylethanolamin und Aminopropylethanolamin besonders bevorzugt.

Beispiele für Alkylamine (a3) sind Bis(aminoethyl)amin, Bis(aminopropyl)amin und deren polymere Homologe, Aminoethylaminopropylamin, Bis(aminopropyl)ethylendiamin, Tris-(aminoethyl)amin, Tris(aminopropyl)amin, Trisaminononan, Aminopropylstearylamin und Aminopropylbisstearylamin. Dabei sind Bis(aminoethyl)amin, Bis(aminopropyl)amin, Aminoethylaminopropylamin, Bis(aminopropyl)ethylendiamin und Aminopropylstearylamin besonders bevorzugt.

Zur Herstellung der Komponente (A) sind auch Mischungen der genannten ein- und mehrwertigen Alkohole (a1) mit den Alkanolaminen (a2) und mit den Alkylaminen (a3) einsetzbar.

Die zur Herstellung der Komponente (A) der Formel (I) und (II) verwendeten Carbonsäuren (b1) können gesättigt, linear oder verzweigtkettig mit 9 - 31 Kohlenstoffatomen, bevorzugt mit 11 - 23 Kohlenstoffatomen im Alkylrest sein. Beispiele für die in Formel (I) und (II) verwendeten gesättigten, linearen Carbonsäuren sind Caprin-, Undecan-, Laurin-, Myristin-, Palmitin-, Stearin-, Arachin- und Behensäure. Dabei sind Laurin-, Palmitin-, Stearin- und Behensäure besonders bevorzugt.

Die zur Herstellung der Komponente (A) der Formel (I) und (II) verwendeten Alkylisocyanate (b2) sind bevorzugt linear mit 9 - 31, insbesondere mit 12 - 22 Kohlenstoffatomen im Alkylrest, wie beispielsweise Stearylisocyanat.

Anstelle der unter Verwendung der mehrwertigen Alkohole (a1) oder der Alkanolamine (a2) oder der Alkylamine (a3) sowie der Carbonsäuren (b1) oder der Alkylisocyanate (b2) hergestellten Komponente (A) können zur Umsetzung mit den nicht blockierten oder teilblockierten Di-, Tri- oder Polyisocyanaten (IC) auch Komponenten mit einem aktiven Wasserstoffatom und zwei hydrophoben Resten, wie beispielsweise Guerbet-Alkohole, Bis(dodecyl)amin und bevorzugt Bis(octadecyl)amin eingesetzt werden.

Für die Umsetzung mit dem nicht blockierten oder teilblockierten Di-, Tri- oder Polyisocyanat (IC) können auch Mischungen beider Verbindungen der Formeln (I) und (II) Verwendung finden.

Sofern Verbindungen der Formeln (I) und (II) kommerziell verfügbar sind, können sie für die genannte Umsetzung direkt eingesetzt werden; eine eigene Herstellung ist dann nicht erforderlich.

Die vorstehend erläuterte Komponente (A) wird mit den anspruchsgemäßen Di-, Tri- oder Polyisocyanaten (IC) zum Produkt (S) umgesetzt. Beispiele für dabei eingesetzte, nicht blockierte oder in teilblockierte Isocyanate zu überführende Di-, Tri- oder Polyisocyanate (IC) werden in der DE-A-100 17 651, Absatz 0032 bis einschließlich 0037 beschrieben.

Besonders bevorzugte Di-, Tri- oder Polyisocyanate (IC) sind beispielsweise 2,4-Toluylendiisocyanat, 2,4'-Diphenylmethandiisocyanat, 4-Methylcyclohexan-1,3-diisocyanat, 4,4'-Diphenylmethandiisocyanat, die Mischungen aus monomeren Diphenylmethandiisocyanaten und höherkettigen Homologen des Diphenylmethandiisocyanates (Polymer-MDI), Tetramethylendiisocyanat, Tetramethylendiisocyanat-Trimere, Hexamethylendiisocyanat, Hexamethylendiisocyanat-Trimere, Isophorondiisocyanat, Isophorondiisocyanat-Trimere, 2,2,4- oder 2,4,4-Trimethyl-1,6-hexamethylendiisocyanat und Dimerdiisocyanat. Dimerdiisocyanat ist erhältlich von der Firma Cognis Corp., 300 Brookside Avenue, Ambler, PA 19002, USA, unter der Bezeichnung DDI 1410.

Die Herstellung cyclisierter Oligo- oder Polyisocyanate kann nach den bekannten Methoden der Cyclisierung gemäß W. Siefken (Liebigs Annalen der Chemie 562, Jahrgang 1949, Seiten 75 -136) erfolgen, wobei die Oligo- oder Polyisocyanate offenkettig oder cyclisch vorliegen können. Derartige Verbindungen können aus den genannten Di-, Tri- und Polyisocyanaten durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminoxadiazindion-Strukturen hergestellt werden. Bevorzugt werden Hexamethylendiisocyanat-Trimere, Diphenylmethandiisocyanat-Trimere und Urethane aus 2,4-Toluylendiisocyanat verwendet, welche noch über freie NCO-Gruppen verfügen.

Es ist auch möglich, Teilmengen der Isocyanatgruppen mit Polyalkoxymonoalkylethern unter Zuhilfenahme entsprechender Katalysatorsysteme zu Urethanen umzusetzen, um die Emulgierbarkeit der Komponente (2) in Wasser zu verbessern. Es können hierbei Polyethylenglykolmonomethylether mit 4 - 20 Ethylenoxideinheiten, optional mit zusätzlichen 2 - 6 Propylenoxydeinheiten Verwendung finden. Als Katalysatoren können die dem Fachmann bekannten Systeme auf Basis tertiärer Amine und/oder zinnorganischen Verbindungen, wie beispielsweise Dibutylzinndilaurat, Dioctylzinndilaurat oder -diacetat verwendet werden.

Alternativ zu den mittels Polyalkoxymonoalkylethern modifizierten Isocyanaten können tertiäre Alkanolamine als Zusatzstoffe Verwendung finden, um die kationische Ladung der Umsetzungsprodukte (S) und damit die selbstemulgierenden Eigenschaften ohne Beeinträchtigung der Gesamteigenschaften zu verbessern. Bevorzugt geeignet ist hierbei Dimethylaminoethanol.

Sofern für die Umsetzung zur Komponente (2) teilblockierte Di-, Tri- oder Polyisocyanate (IC) Verwendung finden, können diese mit den üblichen und bekannten Blockierungsmitteln teilblockiert sein, wie sie beispielsweise in der DE-A-100 17 651, Absatz 0042 beschrieben sind. Bevorzugt werden Natriumbisulfit oder Methylethylketoxim, insbesondere jedoch 3,5-Dimethylpyrazol für die Teilblockierung verwendet.

Die Teilblockierung erfolgt durch Umsetzung der zu blockierenden Di-, Tri- oder Polyisocyanate (IC) mit dem Blockierungsmittel in der Schmelze oder in einem gegenüber Isocyanaten im wesentlichen inerten organischen Lösemittel (LM), vorzugsweise unter einer Schutzgasatmosphäre und in Gegenwart eines geeigneten Katalysators, wie es beispielsweise in der EP-A- 0 159 117 oder der DE-A-44 41 418 beschrieben wird. Das Verhältnis der freien NCO-Gruppen der zu blockierenden Di-, Tri- oder Polyisocyanate (IC) zu den reaktiven Gruppen des Blockierungsmittels liegt vorzugsweise in einem stöchiometrischen Überschuss bis zu 2 : 1, bevorzugt bis zu 3 : 1.

Als geeignete, inerte organische Lösemittel (LM) werden bevorzugt wasserfreie Ester, wie beispielsweise Ethylacetat, n-Propylacetat, i-Propylacetat, n-Butylacetat, i-Butylacetat oder Amylacetat verwendet.

Der Zusatz der Komponente (3) ist optional. Verbindungen dieses Typs werden als Booster bezeichnet. Aufgrund der Polyfunktionalität des Polyisocyanates wird eine Vernetzung mit den auf den meisten Substraten vorhandenen -OH, -COOH oder -NH₂-Gruppen und nicht umgesetzten Funktionen der Komponente (2) bewirkt, wodurch die Beständigkeit gegenüber Waschprozessen deutlich verbessert und die Resistenz gegenüber Abrasion erhöht wird.

Die Komponente (3) kann sowohl in nicht blockierter als auch in blockierter Form zur Verwendung gelangen. Die nicht blockierten Formen der Komponente (3) werden vorwiegend bei Anwendungen aus aprotischen Medien eingesetzt, weil hierbei eine unerwünschte, vorzeitige Umsetzung der freien NCO-Gruppen mit den reaktionsfähigen aktiven Wasserstoffatomen des Anwendungsmediums vermieden wird.

Die zur Herstellung der Komponente (3) geeigneten, nicht blockierten Di-, Tri- oder Polyisocyanate sowie die cyclisierten Oligo- oder Polyisocyanate sind bereits bei der Herstellung des Umsetzungsproduktes (S) in Komponente (2) beschrieben.

Sofern die Komponente (3) aus Anwendungsmedien auf Flächengebilde appliziert werden soll, welche aktive Wasserstoffatome tragen, ist häufig ein Schutz der reaktionsfähigen NCO-Gruppen durch Blockierung mit geeigneten Blockierungsmitteln notwendig. In diesen Fällen erfolgt die Herstellung der Komponente (3) durch Verfahren, bei welchen die vollständige Blockierung der freien NCO-Gruppen von Di-, Tri- oder Polyisocyanaten mit einem Blockierungsagens und gegebenenfalls in einem organischen Lösemittel durchgeführt wird. Um eine vollständige Blockierung zu erzielen, wird üblicherweise ein geringer stöchiometrischer Überschuss an Blockierungsagens eingesetzt. Sofern Produkte für wässrige Anwendungen herzustellen sind, müssen die blockierten Di-, Tri- oder Polyisocyanate, gegebenenfalls gelöst in organischem Lösemittel, unter Verwendung geeigneter Emulgatoren (= Komponente (4)) in Emulsionsform übergeführt werden.

Beispiele für geeignete übliche und bekannte Blockierungsmittel sind aus der DE-A-100 17 651, Absatz 0042 bekannt und bereits in der Beschreibung der Herstellung des Umsetzungsproduktes (S) in Komponente (2) aufgeführt.

In einer besonderen Ausführungsform können als Booster auch nicht blockierte Di-, Tri- oder Polyisocyanate eingesetzt werden, deren Selbstemulgierfähigkeit in Wasser durch partielle Umsetzung der Isocyanatgruppen mit Polyalkoxymonoalkylethern unter Zuhilfenahme entsprechender Katalysatorsysteme zu Urethanen verbessert wird. Durch die Anknüpfung von hydrophilen Seitenketten an die Di-, Tri- oder Polyisocyanate wird der HLB-Wert des so hergestellten Urethanes so günstig verändert, dass die an sich wasserunlösliche Verbindung selbstemulgierende Eigenschaften bekommt. Bei den hydrophilen Seitenketten ist eine gewisse Selektion von Art und Menge des Restes vorteilhaft. Bevorzugt gelangen zwischen 4 und 20 Ethylenoxidreste zur Verwendung, optional gemeinsam mit 2 - 6 Propylenoxidresten, wobei diese auch in Blöcken innerhalb der Alkoxykette vorliegen können. Bei solchen gemischt alkoxylierten Seitenketten überwiegt jedoch der Mengenanteil an Ethylenoxyd immer denjenigen des Propylenoxyds. Als Katalysatoren für die Urethansynthese können die dem Fachmann bekannten Systeme auf Basis tertiärer Amine und/oder zinnorganischen Verbindungen, wie beispielsweise Dibutylzinndilaurat, Dioctylzinndilaurat oder-diacetat verwendet werden.

Bei der Anwendung bilden die so hergestellten Urethane beim Eintrag in Wasser spontan feinteilige Emulsionen mit hoher Stabilität gegenüber Scherkräften und guter Verträglichkeit mit den anderen Komponenten einer Applikationsflotte. Wegen der Reaktivität der restlichen, nicht umgesetzten NCO-Gruppen mit Wasser sind bei diesen Spezialformen in der Applikationsflotte nur begrenzte Topfzeiten bis maximal 8 Stunden möglich.

Der Zusatz der Komponente (3) wird insbesondere in Fällen vorgenommen, wo besonders hohe Anforderungen an die Waschbeständigkeiten der behandelten Flächengebilde gestellt werden. Vorzugsweise werden dann 5 - 35 % dieser Verbindung eingesetzt, welche für die Anwendung aus lösemittelhaltigen, wasserfreien Medien direkt und ohne Formulierungshilfsmittel eingesetzt werden kann. Sofern die Applikation aus wässrigem Medium erfolgt, gelangen vorzugsweise Emulsionen der Komponente (3) mit 15 - 35 Gewichtsprozent Feststoffanteil zum Einsatz, welche unter Verwendung von Emulgatoren (= Komponente (4)) auf Basis ethoxylierter Fettamine, optional in quaternärer Form vorliegend, und gegebenenfalls anderen Emulgierhilfsmitteln, wie beispielsweise Solubilisierungsmitteln auf Basis Ethylenglykol, 1,2-Propylenglykol, Dipropylenglykol, Dipropylenglykolmonomethylether, Mono- oder Diethylenglykolmonobutylether oder N-Methylpyrrolidon hergestellt werden. Die Emulgierung kann dabei unter Zuhilfenahme von Hochdruckhomogenisiermaschinen erfolgen.

Die erfindungsgemäßen Zubereitungen (Zu) können auf Basis von Wasser, auf Basis von Wasser und organischen Lösemitteln sowie auf Basis von organischen Lösemitteln vorliegen.

Wenn die erfindungsgemäßen Zubereitungen (Zu) auf wässriger Basis vorliegen, werden Emulgatoren (= Komponente (4)) eingesetzt. Die für die Formulierung der Komponenten (1), (2) und gegebenenfalls (3) der erfindungsgemäßen Zubereitungen eingesetzten Emulgatoren (= Komponente (4)) sind bekannt. Als Emulgatoren kommen beispielsweise Ethoxylierungsprodukte von Fettsäuren, Fettsäureamiden, Fettalkoholen, Fettaminen, letztere auch in Form ihrer Salze mit niedermolekularen organischen Säuren oder Mineralsäuren sowie quaternäre Ammoniumverbindungen, wie beispielsweise Cetylbenzyldimethylammoniumchlorid und vorzugsweise ethoxyliertes Octadecylmethylammoniumchlorid in Frage. Solche Emulgatoren sind beispielsweise im "Römpp Lexikon Chemie" (10.Auflage, 2. Band, Seite 1149 und 1150) beschrieben.

Die Herstellung der Emulsionen der Komponente (1) erfolgt gewöhnlich durch Emulsionspolymerisation oder durch Polyurethansynthese. Zur Herstellung der Emulsionen der Komponenten (2) und gegebenenfalls (3) werden die bekannten Methoden zur Bildung von Sekundäremulsionen angewendet. Üblicherweise liegt die Emulgiertemperatur oberhalb des Schmelzbereiches der Wirksubstanzen der verwendeten Komponenten (2) und gegebenenfalls (3), vorzugsweise zwischen 50 und 80°C. Um möglichst feinteilige, besonders stabile Emulsionen zu erzeugen, wird häufig zunächst eine grobteilige Voremulsion hergestellt, deren Partikel anschließend unter Zuhilfenahme von Hochdruckhomogenisatoren auf die notwendige durchschnittliche Teilchengröße zwischen 0,1 und 10 Mikrometer verkleinert werden.

Sofern gewünscht, können die als Reaktionsmedium zur Herstellung der Komponenten (2) und gegebenenfalls (3) zugefügten inerten organischen Lösemittel (LM), nach der Emulgierung zur Vermeidung emittierfähiger organischer Kohlenwasserstoffe destillativ entfernt werden.

Wenn die erfindungsgemäßen Zubereitungen (Zu) auf Basis organischer Lösemittel vorliegen, gelangen insbesondere inerte organische Lösemittel zum Einsatz, wie beispielsweise Ethylacetat, n-Propylacetat, i-Propylacetat, n-Butylacetat, i-Butylacetat oder Amylacetat und es werden keine Emulgatoren (= Komponente (4)) benötigt. In diesem Falle sind die Komponenten (1), (2) und gegebenenfalls (3) der erfindungsgemäßen Zubereitungen in den für deren Herstellung angewendeten organischen Lösemittel gelöst.

Bei der Herstellung der FC-Polymere (Komponente (1)) wird in diesem Falle üblicherweise anstelle einer Emulsionspolymerisation eine dem Fachmann bekannte Lösungspolymerisation in Estern, beispielsweise i-Propylacetat oder Butylacetat oder Kohlenwasserstoffgemischen mit einem Siedebereich von etwa 100 bis 240 °C durchgeführt.

Die Herstellung der Komponenten (2) und gegebenenfalls (3) erfolgt in diesem Falle meist in inerten, organischen Lösemitteln (LM), wie beispielsweise Methylacetat, n-Propylacetat, i-Propylacetat, n-Butylacetat, i-Butylacetat oder Amylacetat.

Für eine Anwendung der erfindungsgemäßen Zubereitungen (Zu) aus organischen Lösemitteln sollte bei der Herstellung der Komponenten (1), (2) und gegebenenfalls (3) die Auswahl der verwendeten Lösemittel so erfolgen, dass die darin gelösten Wirksubstanzen dieser Komponenten bei der weiteren Verdünnung in den Anwendungslösemitteln gelöst bleiben.

Weiterer Gegenstand der Erfindung ist die Anwendung der erfindungsgemäßen Zubereitungen gemäß Anspruch 1 als Appretur auf Flächengebilden, insbesondere auf textilen Flächengebilden. Als solche werden beispielsweise Gewebe, Gewirke und vorverfestigte Faservliese (Nonwovens) aus nativen Fasern, wie Wolle oder Baumwolle bzw. Synthetikfasern, insbesondere PES-, PA- und Regeneratfasem oder deren Mischungen verwendet.

Der Auftrag auf die textilen Flächengebilde erfolgt im Allgemeinen mit Auflagen von 0,1 - 5 Gewichtsprozent, vorzugsweise jedoch 0,1 - 3 Gewichtsprozent der Festsubstanz der erfindungsgemäßen Zubereitung bezogen auf das Gewicht des zu behandelnden Flächengebildes. Üblicherweise wird eine Flotte in der gewünschten Konzentration mittels einer Zwangsapplikation aus wässrigem Medium auf dem Foulard mit Flottenaufnahmen von 40 - 100 Gewichtsprozent, anschließender Vortrocknung bei 80 - 110°C und einer nachfolgenden Heißbehandlung bei 130 - 170°C während 1 - 5 Minuten vorgenommen. Die Dauer der Hitzebehandlung ist jeweils abhängig von den angewandten Temperaturen.

Eine weitere Auftragsmöglichkeit auf textile Flächengebilde ist durch das dem Fachmann bekannte Ausziehverfahren gegeben.

Der Auftrag auf textile Flächengebilde kann ferner mittels Sprühen, durch Pinsel- oder Schwammauftrag erfolgen.

Bei der Anwendung auf textilen Flächengebilden können die erfindungsgemäßen Zubereitungen auch mit den in der Textilindustrie üblichen Textilhilfsmitteln kombiniert werden. Hervorzuheben sind Mittel, welche die Entknitterungseigenschaften verbessern, beispielsweise Methylolverbindungen des Dihydroxyethylenharnstoffes oder Methylolmelaminether unterschiedlichen Methylolierungsgrades. Ferner kommen als Textilhilfsmittel solche in Betracht, welche die Flammfestigkeit verbessern oder dem Flächengebilde einen vom Kunden gewünschten Griff (z.B. Weichheit, Fülle oder Glätte etc.) verleihen. Der Warengriff kann jedoch durch geeignete Kombination der Komponenten (1) bis (3) in der gewünschten Richtung gesteuert werden, weshalb in diesen Fällen auf weitere Textilhilfsmittel verzichtet werden kann.

Viele konfektionierte Artikel werden entweder im häuslichen Bereich auf Haushaltswaschmaschinen oder auf Industriewaschmaschinen gewaschen. Letzteres trifft in hohem Ausmaß auf die Berufsbekleidung von Mitgliedern der Feuerwehr, Polizei, Militär und anderen Berufszweigen zu, welche sich häufig im Freien aufhalten müssen und damit der Witterung ausgesetzt sind. Die üblicherweise öl-, wasser- und schmutzabweisend appretierten Kleidungsstücke erleiden durch die Wäsche einen Verlust dieser Eigenschaften. Häufig werden daher durch eine Nachbehandlung mit Phobiermitteln diese Eigenschaften wieder aufgefrischt und revitalisiert. Die erfindungsgemäßen Zubereitungen können für diese Anwendung Einsatz finden.

Die revitalisierende Behandlung der industriell gewaschenen, konfektionierten Artikel erfolgt in der Wasch- bzw. Schleudertrommel durch Aufgießen einer Flotte der erfindungsgemäßen Zubereitungen auf die schleuderfeuchten Waschartikel und anschließendes Trocknen im Tumbler. Bei Haushaltswaschmaschinen kann die Appretur mittels des üblichen Nachbehandlungsspülganges oder eines Dosierkugelsystems erfolgen.

Weiterer Gegenstand der Erfindung ist die Anwendung der erfindungsgemäßen Zubereitungen als Appretur auf Flächengebilden mit der Maßgabe, dass die Anwendung aus organischen Lösemitteln im Tränk- oder Tauchverfahren erfolgt.

Viele Kleidungsstücke werden nicht gewaschen, sondern einer Reinigung in organischen Lösemitteln unterzogen. Ähnlich wie bei der Nachbehandlung gewaschener Artikel können auch hier durch Auffrischen mit Produkten auf Basis der erfindungsgemäßen Zubereitungen die wasserabweisenden Eigenschaften revitalisiert werden.

Die revitalisierende Behandlung der in organischen Lösemitteln gereinigten, konfektionierten Artikel erfolgt in der Reinigungstrommel der Chemischreinigungsmaschinen durch Aufgießen oder Aufsprühen einer Flotte der erfindungsgemäßen Zubereitungen auf die schleuderfeuchten, gereinigten Artikel und anschließendes Entfernen der Lösemittel im Tumbler bei erhöhten Temperaturen. Dabei ist der chemische Charakter des reinigenden Agens unerheblich, d.h. die Behandlung kann sowohl auf modernen Maschinen in geschlossenen Systemen mit Perchlorethylen erfolgen oder auf solchen, welche für die Behandlung mit Lösemitteln auf Kohlenwasserstoffbasis, wie beispielsweise Isopar J geeignet sind.

Weiterer Gegenstand der Erfindung ist die Anwendung der erfindungsgemäßen Zubereitungen als Appretur auf Flächengebilden mit der Maßgabe, dass die Anwendung aus organischen Lösemitteln mittels Sprühmethoden erfolgt.

Anstelle einer revitalisierenden Behandlung textiler Flächengebilde nach Wasch- oder Reinigungsprozessen durch Auftrag der erfindungsgemäßen Zubereitungen aus kontinuierlichen, wässrigen- oder lösemittelhaltigen Flotten kann für die Anwendung im häuslichen Bereich (Consumer Care Bereich) die Applikation der erfindungsgemäßen Zubereitungen auch mittels diverser Sprühmethoden vorgenommen werden. Hierfür werden Phobiermittel, formuliert in organischen Lösemitteln und Treibgasen aus Sprühdosen oder durch Pumpmechanismen angeboten. Insbesondere für den Schuhpflegebereich ist eine erhebliche Verbesserung der Wasserabweisung und damit des Tragekomforts zu erzielen.

Die nachfolgenden Beispiele erläutern die Erfindung. Die Applikation der Appreturen auf textilen Flächengebilden erfolgte auf einem Laborfoulard der Type LFV 350/2 "RFA" (Fa. Benz, Schweiz) mit nachfolgender Trocknung und Heißbehandlung auf einem Laborspannrahmen der Type TKF 15/M 350 (Fa. Benz, Schweiz). Sofern Sprühapplikation durchgeführt wurde, erfolgte dies im geschlossenen Abzug durch manuellen und einseitigen Auftrag mittels Pumpspray auf das aufgespannte Flächengebilde mit anschließender Trocknung bei Raumtemperatur während 24 Stunden. Die Bestimmung der Flottenaufnahme erfolgte durch Auswiegen der appretierten Testmuster vor und nach der Applikation.

Die Prüfung der öl- und wasserabweisenden Effekte erfolgte nicht unmittelbar nach der Applikation, sondern erst nach einer Konditionierung der Substrate im Normklima während 24 Stunden, um Einflüsse auf diese Eigenschaften durch Übertrocknung zu nivellieren. Auflagemengen sowie die Bedingungen der Heißbehandlung sind gemeinsam mit den zu erzielenden Phobiereffekten in den Tabellen 3a und 3b aufgeführt.

Die Wasserabweisung wurde auf den textilen Flächengebilden sowohl mittels Spraytest gemäß AATCC Standard Test Method 22 als auch mittels des wesentlich stärker differenzierenden "Bundesmanntests" gemäß DIN 53 888 getestet. Die Prüfung gemäß AATCC Standard Test Method 22 erfolgt durch Aufsprühen von destilliertem Wasser unter kontrollierten Bedingungen auf das zu testende textile Substrat und anschließenden visuellen Vergleich des Benetzungsmusters zu Bildern eines in der Testmethode aufgeführten Beurteilungsstandards. Die angegebenen Zahlenwerte beziehen sich dabei auf das Erscheinungsbild der Oberfläche nach dem Aufsprühen des Wassers und haben folgende Bedeutung:

| | | |
|---|---|---|
| 100 | = | Kein Anhaften von Wassertropfen oder Benetzung der oberen Oberfläche |
| 90 | = | Vereinzeltes Anhaften von Wassertropfen oder Benetzung der oberen Oberfläche |
| 80 | = | Benetzung der oberen Oberfläche an den Auftreffpunkten des Wassers |
| 70 | = | Teilweise Benetzung der ganzen oberen Oberfläche |
| 50 | = | Vollständige Benetzung der ganzen oberen Oberfläche |
| 0 | = | Vollständige Benetzung der ganzen oberen und unteren Oberfläche (Durchnetzung). |

Beim stärker differenzierenden "Bundesmanntest" gemäß DIN 53 888 wird das zu testende textile Substrat der Einwirkung eines definierten künstlichen Regens ausgesetzt und die nach einer bestimmtem Dauer aufgenommene Wassermenge in Prozent bestimmt und ist in den Tabellen 3a und 3b als "Wasseraufnahme" gekennzeichnet. Aufgrund von Erfahrungswerten haben sich bei der Beurteilung der Wasseraufnahme bei den gängigen Faserarten Baumwolle und Polyester folgende Bewertungsbereiche ergeben:

| | % Wasseraufnahme | |
|---|---|---|
| Bewertung | Baumwolle | Polyester |
| | | |
| Hervorragend | 5 - 10 | 0 -1 |
| Sehr gut | 10 - 15 | 1 - 2 |
| Gut | 15-20 | 2-5 |
| Befriedigend | 20 - 30 | 5-10 |
| Schlecht | über 30 | über 10 |

Weiterhin wird der in Tabellen 3a und 3b als "Abperleffekt" gekennzeichnete Wasser-Abperleffekt zur Beurteilung herangezogen. Dieser wird durch visuellen Vergleich der beregneten Testmuster mit in der DIN-Vorschrift aufgeführten Bildern nach 5 Noten beurteilt, die wie folgt gekennzeichnet sind:

| | |
|---|---|
| Note 5 = | Kleine Tropfen perlen lebhaft ab |
| Note 4 = | Ausbildung größerer Tropfen |
| Note 3 = | Tropfen bleiben stellenweise auf der Messprobe hängen |
| Note 2 = | Messprobe teilweise angenetzt |
| Note 1 = | Messprobe auf der gesamten Fläche an- bzw. durchgenetzt. |

Die Ölabweisung wurde gemäß AATCC Standard Test Method 118 geprüft. Dabei wird die Fähigkeit des textilen Substrates beurteilt, der Benetzung durch flüssige Kohlenwasserstoffe mit unterschiedlichen Oberflächenspannungen zu widerstehen. Der Test liefert einen groben Index der Fähigkeit eines Substrates, ölige Verschmutzungen abzuweisen,
wobei in der Bewertungsskala die höheren Benotungen eine bessere Abweisung solcher Verschmutzungen, insbesondere gegen ölige Flüssigkeiten bedeuten. Bei dem Test werden Tropfen von standardisierten Testflüssigkeiten, bestehend aus einer ausgewählten Serie von Kohlenwasserstoffen mit unterschiedlichen Oberflächenspannungen nacheinander auf die Oberfläche des zu testenden Prüfmusters durch vorsichtiges Auftropfen appliziert und die Benetzung nach definierter Kontaktzeit visuell beurteilt. Der Ölabweisungswert entspricht der Testflüssigkeit mit der höchsten Nummer, durch welche keine Benetzung der Oberfläche verursacht wird. Die Standard-Testflüssigkeiten haben folgende Zusammensetzung:

| Ölabweisung | Zusammensetzung |
|---|---|
| Note 1 = | "Nujol" |
| Note 2 = | 65 Vol.% "Nujol" zu 35 Vol.-% n-Hexadecan |
| Note 3 = | n-Hexadecan |
| Note 4 = | n-Tetradecan |
| Note 5 = | n-Dodecan |
| Note 6 = | n-Decan |
| Note 7 = | n-Octan |
| Note 8 = | n-Heptan. |

Mit FC-Polymeren des Standes der Technik werden zum gegenwärtigen Zeitpunkt Ölabweisungswerte von 6 erreicht; die Note 5 wird jedoch üblicherweise schon als ausgezeichneter Wert betrachtet.

Um die Beständigkeit der appretierten Flächengebilde gegenüber Waschprozessen zu prüfen, wurden die Testmuster gemäß EN ISO 6330:2000 bei 60°C gewaschen und getrocknet und während 1 Minute bei 120°C auf der Bügelpresse gebügelt.

### Herstellung der Komponente (1)

Die Herstellung der gemäß Tabelle 2 verwendeten FC-Polymeremulsion (= Komponente (1)), erfolgt durch Emulsionspolymerisation entsprechend DE-A-29 39 549, Referenzbeispiel 1. Die dort genannten Verbindungen werden jedoch hinsichtlich Art und Menge wie nachfolgend beschrieben abgeändert:
Eine Mischung, bestehend aus
   - 177 Gramm: einer Verbindung der Formel CₙF₂ₙ₊₁-CH₂CH₂OOCCH=CH₂ mit einer durchschnittlichen Kettenlänge von n = 8,1,
   - 49 Gramm: Stearylmethacrylat,
   - 6 Gramm: CH₂=CCH₃COOCH₂CH(OH)CH₂Cl und
   - 50 Gramm: 1,2-Propylenglykol wird auf 70°C erwärmt und in eine 70°C warme Mischung aus
   - 460 Gramm: demineralisiertem Wasser,
   - 230 Gramm: 1,2-Propylenglykol,
   - 13 Gramm: N-Methylolacrylamid 50%,
   - 1 Gramm: Alkyl-N,N-polyoxyethylenammoniumchlorid (Ethoquad HT 25 (AKZO)) (= Komponente (4)) und
   - 10 Gramm: eines Adduktes aus Stearinsäure und 14 Mol Etylenoxid (= Komponente (4)) einturbiniert. Die entstandene Voremulsion wird auf einer Hochdruckhomogenisiermaschine homogenisiert, anschließend mit
   - 2 Gramm: Dodecylmercaptan und
   - 2 Gramm: Azobisisobutylamidinhydrochlorid versetzt und während 6 Stunden bei 70°C unter einer Stickstoffatmosphäre weitergerührt, wobei die Polymerisation abläuft. Der Umsetzungsgrad beträgt gemäß GC-Analyse 98%. Die erhaltene Emulsion enthält das Copolymer in einer Menge von 25 Gewichtsprozent.

### Herstellung der Komponente (2)

### Komponente (A):

### Allgemeine Herstellungsvorschrift für Komponenten (A) der Formel (I) und/oder (II)

Diese bezieht sich auf die Spalten 1 - 7 und 9 - 11 der Tabelle 1. In einem geeignet dimensionierten Dreihalskolben, ausgestattet mit Destillationskühler, regelbarem Rührer und Innenthermometerwerden die in Tabelle 1 angegebenen Komponenten (a1, a2 oder a3) und (b1) in den dort angegebenen Mengen in Gramm unter Schutzgas und Rühren aufgeschmolzen. Anschließend wird das Gemisch auf die in Tabelle 1 angegebene Endtemperatur (T) aufgeheizt und solange weitergerührt bis kein Reaktionswasser mehr abdestilliert und die in Tabelle 1 genannte Säurezahl (SZ) erreicht ist. Bedarfsweise kann bei den Veresterungsreaktionen 0,1 Gewichtsprozent Schwefelsäure als Katalysator zugesetzt werden. Bei den Amidierungsreaktionen ist kein Zusatz von Katalysator notwendig. Das resultierende Kondensationsprodukt wird ausgegossen und nach dem Abkühlen zu Schuppen verarbeitet.

### Besondere Herstellungsvorschrift für Komponenten (A) der Formel (I) und/oder (II) unter Verwendung von Alkylisocyanaten (b2) und Weiterverarbeitung zum Umsetzungsprodukte (S)

Diese bezieht sich auf die Spalte 12 der Tabelle 1. In einem geeignet dimensionierten Dreihalskolben, ausgestattet mit Rückflußkühler, regelbarem Rührer, Innenthermometer und Tropftrichter werden die in Tabelle 1 angegebenen Komponenten (a1) und (b2) in Gramm in Isopropylacetat (LM) vorgelegt. Anschließend werden, bezogen auf die Gesamtmenge der Komponenten, 0,05 Gewichtsprozent 1,4-Diazabicyclo(2,2,2)octan als Katalysator zugesetzt und die Mischung solange bei 80°C gerührt, bis im IR-spektrum keine NCO-Bande mehr erkennbar ist. Anschließend wird dem Gemisch zur Herstellung des Umsetzungsproduktes (S) die in Tabelle 1 angegebene Mengen in Gramm von Komponente (IC) zugegeben und solange bei 80°C weitergerührt, bis im IR-spektrum keine NCO-Bande mehr erkennbar ist.

### Umsetzungsprodukte (S) (= Komponente (2)): Allgemeine Herstellungsvorschrift für Umsetzungsprodukte (S) aus einer Komponente (A) und nicht blockierten oder teilblockierten Di-, Tri- oder Polyisocyanaten (IC)

Diese bezieht sich auf die Spalte 1 - 12 der Tabelle 1. In einem geeignet dimensionierten Dreihalskolben, ausgestattet mit Rückflußkühler, regelbarem Rührer, Innenthermometer und Tropftrichter werden die in Tabelle 1 angegebenen Komponenten (A) und die Komponenten (IC) in den dort angegebenen Mengen in Gramm in Isopropylacetat (LM) vorgelegt. Anschließend werden, bezogen auf die Gesamtmenge der Komponenten, 0,05 Gewichtsprozent 1,4-Diazabicylo(2,2,2)octan als Katalysator zugesetzt und die Mischung solange bei 65°C gerührt, bis im IR-spektrum keine NCO-Bande mehr erkennbar ist.

### Besondere Herstellungsvorschrift für die in den Emulsionen (E) 1 und 2 eingesetzten Umsetzungsprodukte (S)

Diese bezieht sich auf die Spalten 1 und 2 der Tabelle 1. Zur Herstellung der Emulsionen (E) werden Umsetzungsprodukte (S) verwendet, bei deren Herstellung (Reaktion der Komponente (A) mit dem Isocyanat (IC)) noch die in der Tabelle 1 angegebenen Menge in Gramm Dimethylaminoethanol zugesetzt werden. Durch die Einführung tertiärer Aminogruppen werden in besonders vorteilhafter Weise die Kationogenität und damit das Aufziehverhalten auf textile Substrate sowie die selbstemulgierenden Eigenschaften der Komponente (2) in der wässrigen Emulsion (E) unter sauren Bedingungen verbessert.

### Allgemeine Herstellungsvorschrift für Emulsionen (E) aus Komponente (2) bzw. den Umsetzungsprodukten (S)

**Organische Phase:** In einem geeignet dimensionierten Becherglas werden die in Tabelle 1 angegebenen Mengen in Gramm von Umsetzungsprodukt (S), vorliegend im vorstehend genannten Isopropylacetat vorgelegt und unter Rühren auf 65 - 70°C aufgeheizt, bis eine klare, homogene Lösung vorliegt. Das zu verwendende Umsetzungsprodukt (S) muss gegebenenfalls vor der Anwendung bei 65 - 70°C aufgeschmolzen werden, um ein homogenes Edukt zu erhalten.
**Wässrige Phase:** In einem geeignet dimensionierten Becherglas werden die in Tabelle 1 angegebenen Mengen in Gramm an Emulgatoren (Em) (= Komponente (4)) in der angegebenen Menge Wasser bei 65°C gelöst. Unter einem Schnellrührer werden beide Phasen zu einer grobteiligen Voremulsion verrührt und anschließend bei 65°C auf der Hochdruckhomogenisiermaschine bei 300 - 500 bar homogenisiert, bis eine durchschnittliche Teilchengröße zwischen 0,1 und 10 Mikrometer erreicht ist. Anschließend wird das Lösemittel (LM) auf dem Rotationsverdampfer im Vakuum durch azeotrope Destillation entfernt. Gegebenenfalls wird der pH-Wert der erhaltenen Emulsion mit Essigsäure 60 %ig auf 5 - 7 eingestellt, die erhaltene weiße Emulsion über ein Filter mit 20 Mikrometer filtriert und mit Wasser auf einen Feststoffgehalt von 20 Gewichtsprozent eingestellt.

### Herstellung der Komponente (3)

Die Herstellung der gemäß Tabelle 2 gegebenenfalls verwendeten Boosteremulsionen (= Komponente (3)) erfolgt durch Blockierung der NCO-Gruppen eines aromatischen Diisocyanates in Isopropylacetat, anschließende Emulgierung und Hochdruckhomogenisierung und Abdestillation der Lösemittelanteile.

**Organische Phase:** In einem geeignet dimensionierten Dreihalskolben, ausgestattet mit Rückflußkühler, regelbarem Rührer, Innenthermometer und Tropftrichter werden 125 Gramm (0,5 mol) Methylendiphenyldiisocyanat in 450 Gramm Isopropylacetat vorgelegt und unter Schutzgas mit 87,1 Gramm (1 mol) 2-Butanonoxim versetzt, wobei die Innentemperatur 70°C nicht übersteigen darf. Die Mischung wird 2 Stunden bei 65°C gerührt, bis im IR-spektrum keine NCO-Bande mehr erkennbar ist.
**Wässrige Phase:** In einem geeignet dimensionierten Becherglas werden 30 Gramm Alkyl-N,N-polyoxyethylenammoniumchlorid (Ethoquad HT 25 (AKZO)) (= Komponente (4)) in 800 Gramm Wasser bei 65°C gelöst. Unter einem Schnellrührer werden beide Phasen zu einer grobteiligen Voremulsion verrührt und anschließend bei 65°C auf der Hochdruckhomogenisiermaschine bei 500 bar homogenisiert, bis eine durchschnittliche Teilchengröße unter 10 Mikrometer erreicht ist. Anschließend wird das Lösemittel (LM) auf dem Rotationsverdampfer im Vakuum durch azeotrope Destillation entfernt. Gegebenenfalls wird der pH-Wert der erhaltenen Emulsion mit Essigsäure 60 %ig auf 5 - 7 eingestellt, die erhaltene weiße Emulsion über ein Filter mit 20 Mikrometer filtriert und mit Wasser auf einen Feststoffgehalt von 20 Gewichtsprozent eingestellt.

### Herstellung der erfindungsgemäßen Zubereitungen (Zu)

Die in der Tabelle 2 aufgeführten Zubereitungen (Zu) werden aus den Komponenten (1), (2), gegebenenfalls (3) und gegebenenfalls Wasser in den angegebenen Gewichtsverhältnissen durch einfaches Zusammenrühren bei Raumtemperatur hergestellt.

### Appreturbeispiele

### Anwendung von Zubereitungen (Zu) auf wässriger Basis auf textilen Flächengebilden :

Ausrüstungskonditionen und Prüfergebnisse sind in den Tabellen 3a und 3b aufgeführt.

### Anwendung von Zubereitungen (Zu) auf Lösemittelbasis auf textilen Flächengebilden (in den Tabellen 3a und 3b nicht aufgeführt):

Die Herstellung der Komponente (1) für die Anwendung aus Lösemittel erfolgt durch Lösungspolymerisation:
Eine Mischung, bestehend aus
   - 169 Gramm: einer Verbindung der Formel CₙF₂ₙ₊₁-CH₂CH₂OOCCH=CH₂ mit einer durchschnittlichen Kettenlänge von n = 8,1,
   - 50 Gramm: Stearylmethacrylat,
   - 2 Gramm: N-Methylolacrylamid 50%,
   - 35 Gramm: Vinylidenchlorid und
   - 2 Gramm: Azobisisobutylamidinhydrochlorid
   - 742 Gramm: Isopropylacetat wird auf 50°C erwärmt und während 18 Stunden unter einer Stickstoffatmosphäre weitergerührt, wobei die Polymerisation abläuft. Der Umsetzungsgrad beträgt gemäß GC-Analyse 98%. Die erhaltene Lösung enthält das Copolymer in einer Menge von 25 Gewichtsprozent.

Für die Applikation werden 3 Gramm des so erhaltenen Copolymeres (= Komponente (1)) mit 9 Gramm des in Tabelle 1 in der Spalte mit der Nummer 4 aufgeführten Umsetzungsproduktes (S) (= Komponente (2)) in Isopropylacetat gelöst. Mittels eines Pumpzerstäubers wird die Lösung aus einer Distanz von etwa 30 cm auf die in Tabelle 3a und 3b beschriebenen Baumwoll- und Polyestersubstrate aufgesprüht, bis die Oberflächen einheitlich benetzt sind. Anschließend wird während 24 Stunden bei Raumtemperatur getrocknet. Die behandelten Testgewebe aus Baumwoll-Popeline zeigen eine Wasserabweisung gemäß AATCC Standard Test Method 22 von 90 sowie eine Ölabweisung gemäß AATCC Standard Test Method 118 von 4, die Testgewebe aus Polyester eine Wasserabweisung von 100 sowie eine Ölabweisung von 5.

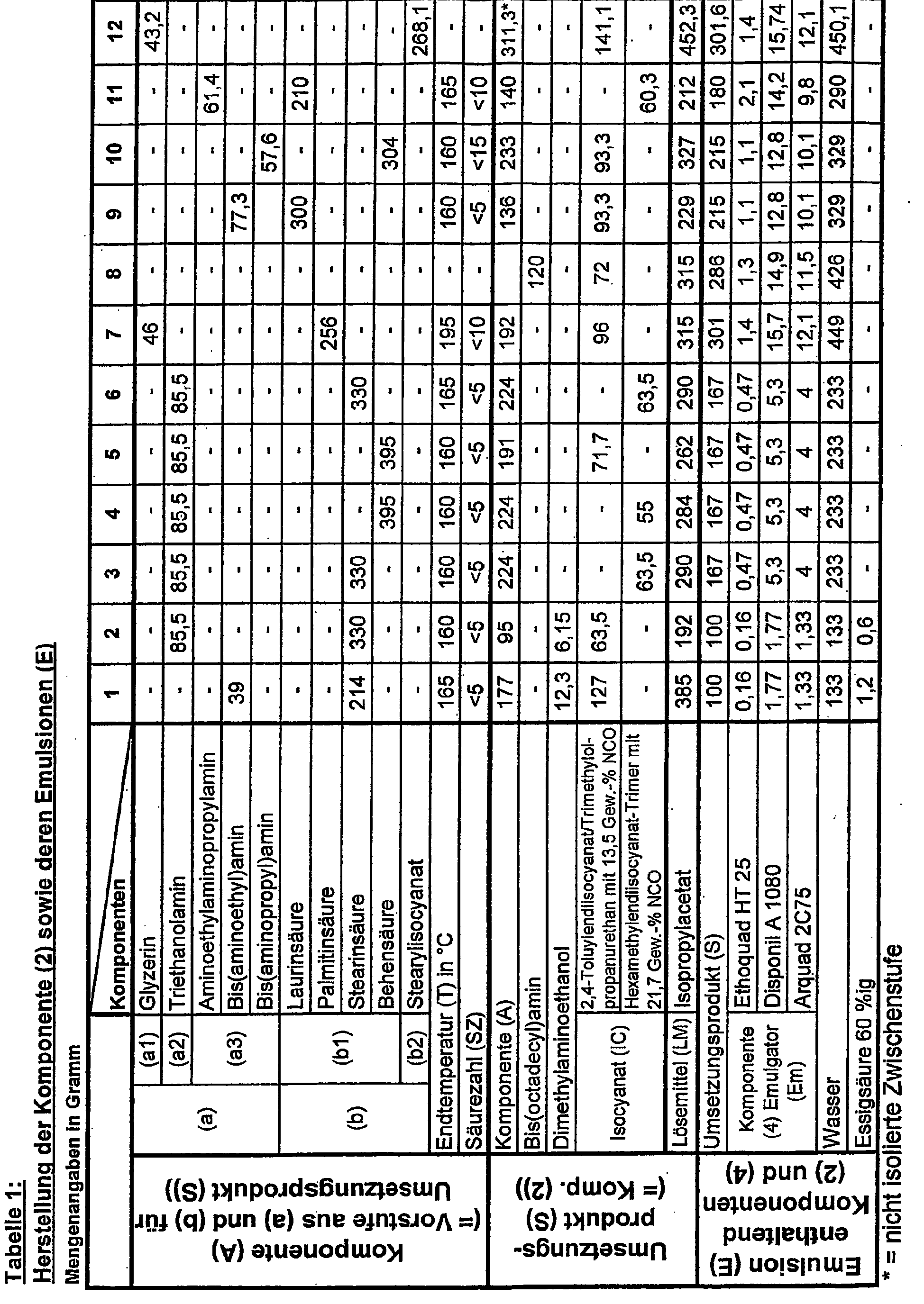

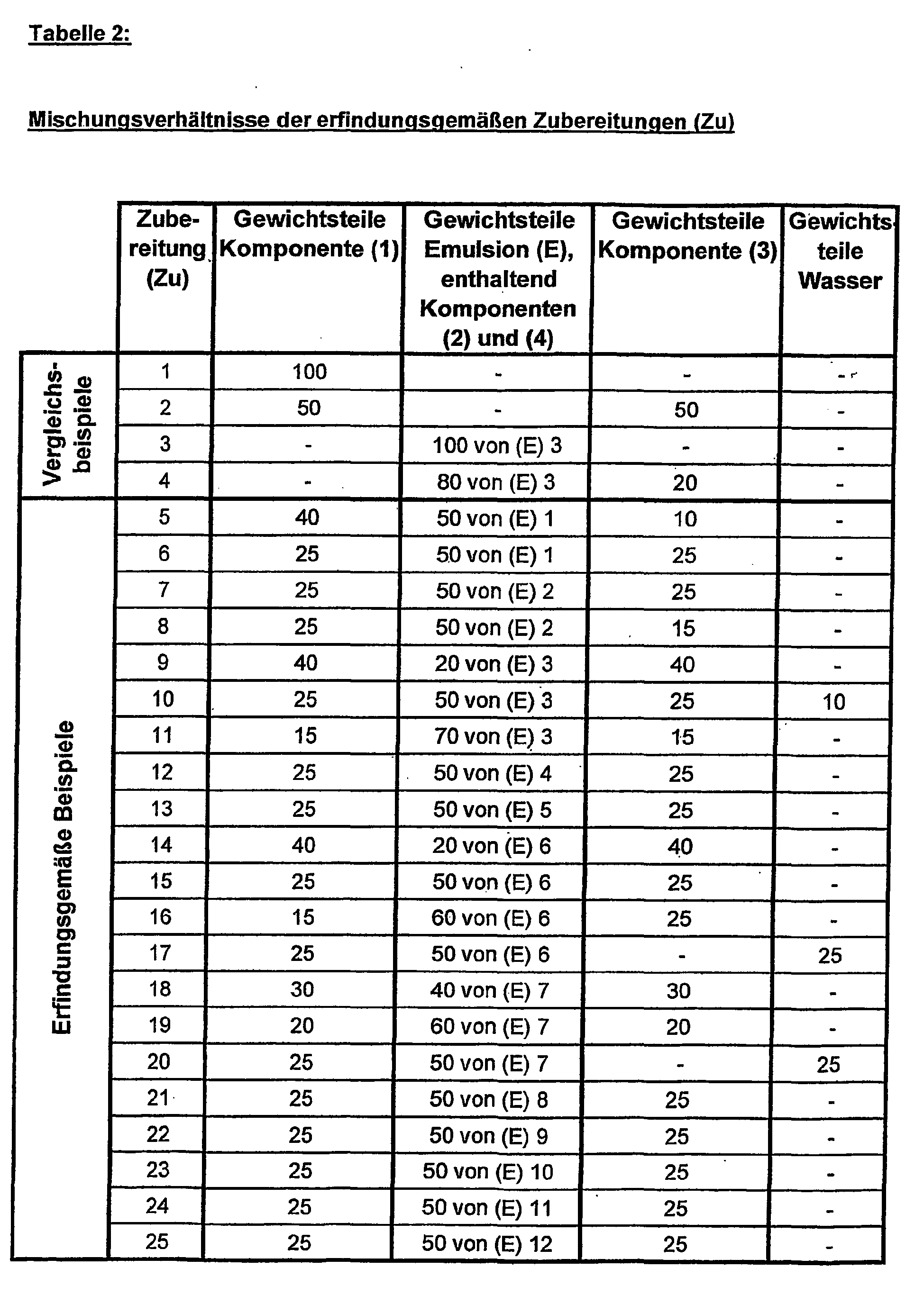

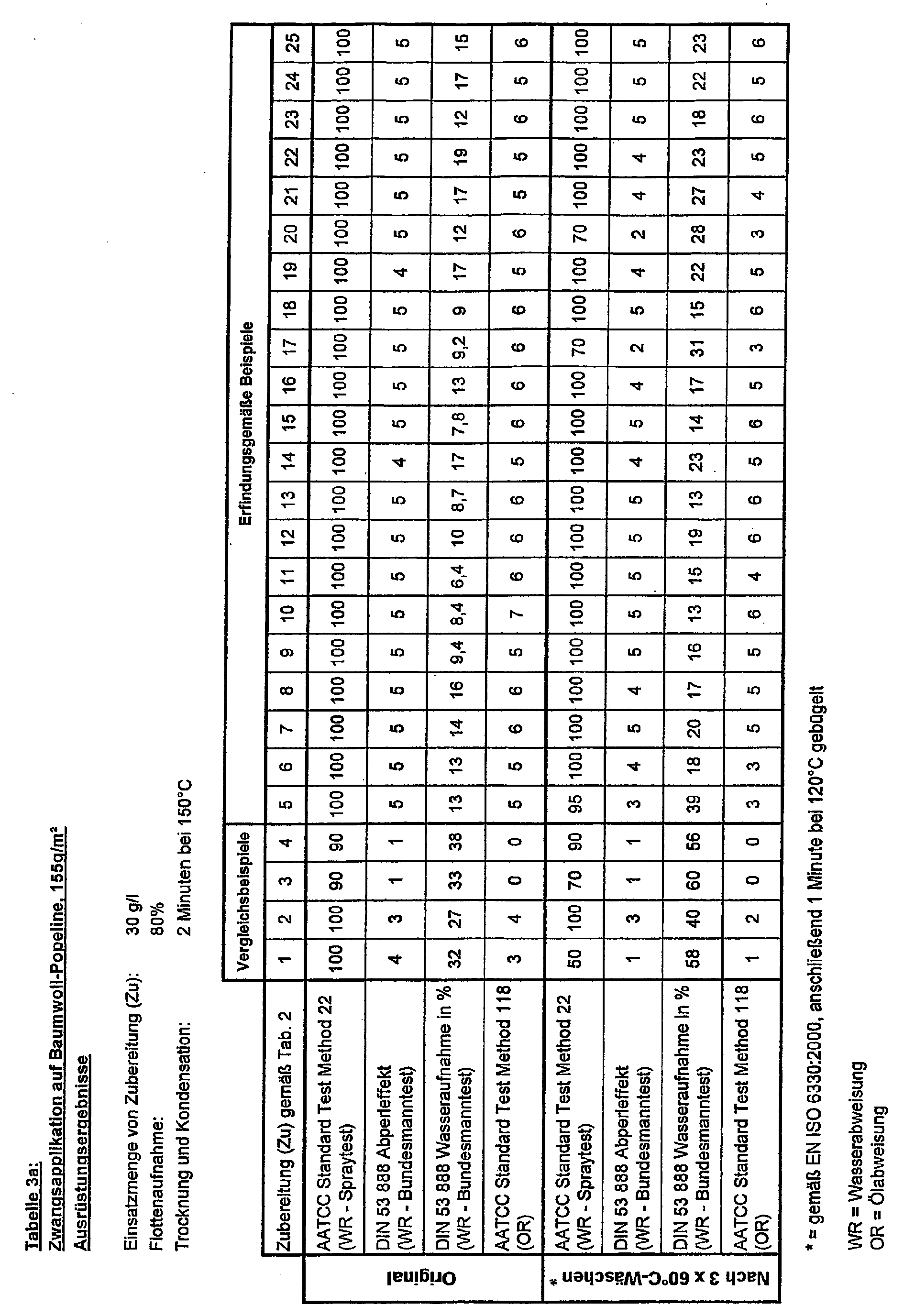

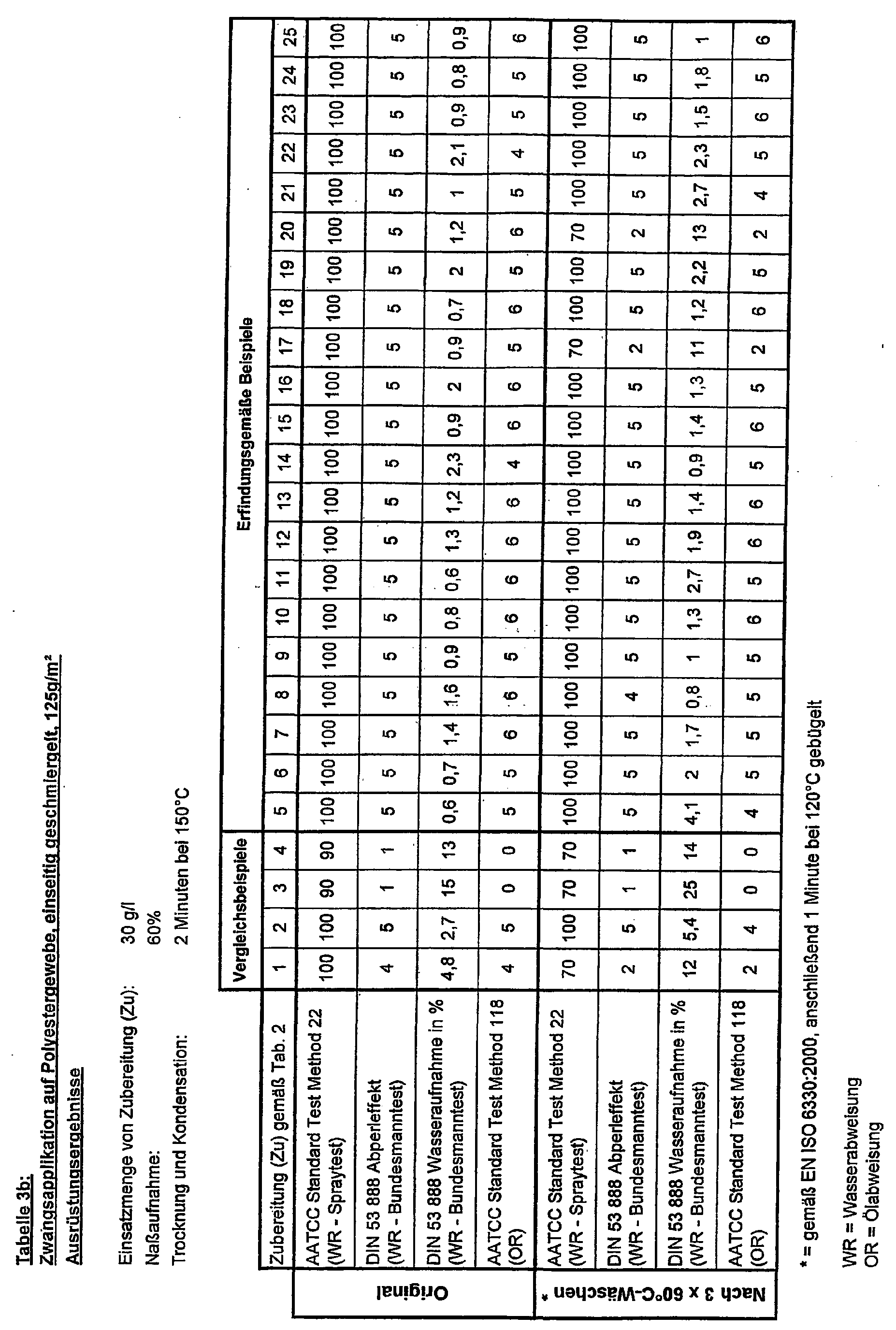

## Patentansprüche

1. Zubereitungen (Zu) auf Basis von Wasser und/oder organischen Lösemitteln, **gekennzeichnet durch** den Gehalt folgender Einzelkomponenten:
(1) 10 - 90 Gewichtsprozent eines fluorhaltigen öl- und wasserabweisenden Mittels,
(2) 10 - 80 Gewichtsprozent eines hydrophoben Umsetzungsproduktes (S), erhältlich **durch** Umsetzen einer Komponente (A) der Formel (I) 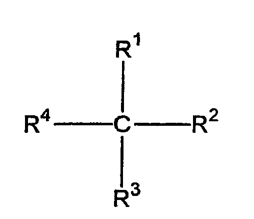 und/oder der Formel (II) 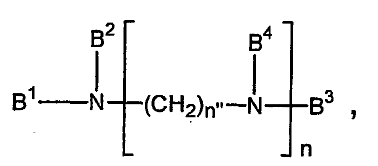 wobei R¹ ein hydrophober Rest der Bedeutung -X-Y-Z oder -Z ist, in welchem
X = -(CH₂)_{n"}- ,
Y = 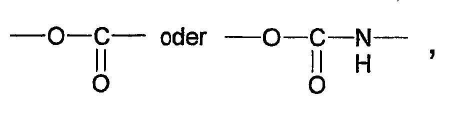 Z = -(CH₂)ₘ'-CH₃ bedeutet,
R² ein Rest der Zusammensetzung 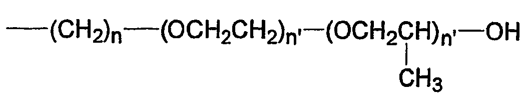 ist,
R³ ein hydrophober Rest der Bedeutung -X-Y-Z, -Z oder -Y-Z ist, mit der Maßgabe, dass im Falle der Bedeutung -Y-Z dann im Rest R²n durch n" ersetzt ist,
R⁴ ein Rest der Bedeutung X-Y-Z oder -(CH₂)_{n'}H ist,
B¹ ein hydrophober Rest der Bedeutung -V-W-Z oder -Z ist, in welchem V = -(CH₂)ₙ"- oder 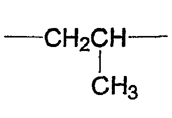 ist,
W = 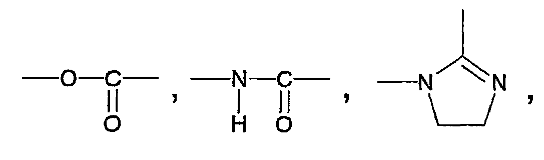 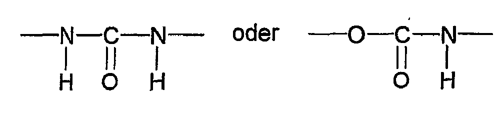 ist,
B² = 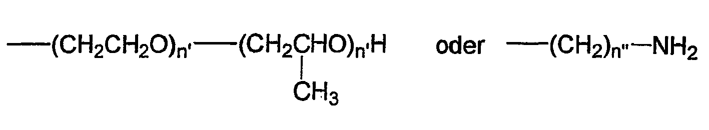 ist,
B³ = ein hydrophober Rest der Bedeutung -V-W-Z, -Z oder 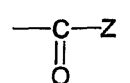 ist,
B⁴ = V-W-Z oder 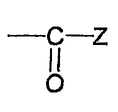 ist,
n, n', n", m und m' ganze Zahlen der Bedeutung
n = 0 - 2,
n' = 0 - 4,
n" = 1 - 4,
m = 3 - 11 und
m' = 12 - 26 sind
mit einem nicht blockierten oder teilblockierten Di-, Tri- oder Polyisocyanat (IC), wobei der Anteil an freien NCO-Gruppen zwischen 1,8 und 10 pro Mol liegt und das Verhältnis der freien NCO-Gruppen zu den reaktionsfähigen Gruppen der Verbindungen der Formeln (I) und/oder (II) 1 : 1 bis 1 : 1,3 ist,
(3) 0 - 45 Gewichtsprozent eines nicht blockierten oder blockierten Di-, Tri- oder Polyisocyanates und
(4) gegebenenfalls übliche Emulgatoren,
wobei die genannten Zubereitungen (Zu) frei von Wachsen und Wachsmischungen sind.

2. Anwendung der Zubereitungen gemäß Anspruch 1 als Appretur auf Flächengebilden.

3. Anwendung der Zubereitungen gemäß Anspruch 2 auf textilen Flächengebilden, wobei die Appretur mittels Zwangsapplikation oder im Ausziehverfahren erfolgt.

4. Anwendung der Zubereitungen gemäß Anspruch 2 auf textilen Flächengebilden, wobei der Auftrag mittels Sprühen, durch Pinsel- oder Schwammauftrag erfolgt.

5. Anwendung der Zubereitungen gemäß Anspruch 2 auf textilen Flächengebilden, wobei die Anwendung aus organischen Lösemitteln im Tränk- oder Tauchverfahren oder mittels Sprühmethoden erfolgt.

6. Anwendung der Zubereitungen gemäß Anspruch 3 auf textilen Flächengebilden, wobei die Appretur als Nachbehandlung gewaschener Textilien erfolgt.

## Claims

1. Preparations (Zu) based on water and/or organic solvents, **characterised by** the content of the following individual components:
(1) 10 - 90 wt.% of a fluorine-containing, oil- and water-repellent agent,
(2) 10 - 80 wt.% of a hydrophobic reaction product (S) obtainable by reaction of a component (A) of formula (I) 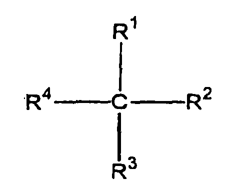 and/or formula (II) 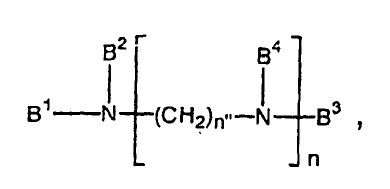 wherein R¹ is a hydrophobic radical with the meaning X-Y-Z or -Z, in which
X = -(CH₂)_{n"}- ,
Y = 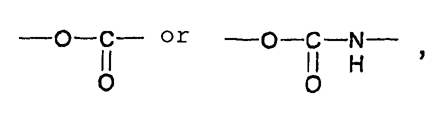 Z = -(CH₂)_{m'}-CH₃
R² is a radical with the composition 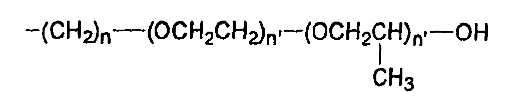 R³ is a hydrophobic radical with the meaning -X-Y-Z, -Z or -Y-Z, with the proviso that, where the meaning is -Y-Z, n is replaced by n" in the R² radical,
R⁴ is a radical with the meaning -X-Y-Z or - (CH₂)ₙ, H,
B¹ is a hydrophobic radical with the meaning -V-W-Z or -Z, in which
V = -(CH₂)_{n"}- or 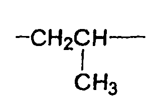 W = 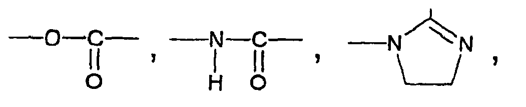 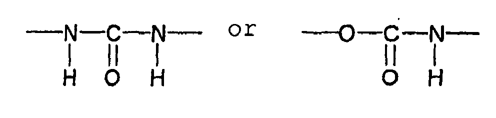 B² = 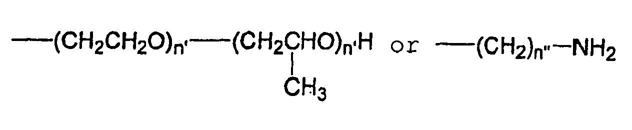 B³ is a hydrophobic radical with the meaning -V-W-Z, -Z or 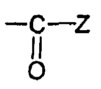 B⁴ = -V-W-Z or 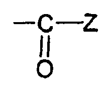 n, n', n", m and m' are integers with the meanings
n = 0 - 2,
n' = 0 - 4,
n" = 1 - 4,
m = 3 - 11 and
m' = 12 - 26,
with an unblocked or partially blocked di-, tri- or polyisocyanate (IC), wherein the proportion of free NCO groups is between 1.8 and 10 per mole and the ratio of the free NCO groups to the reactive groups of the compounds of formulae (I) and/or (II) is 1 : 1 to 1 : 1.3,
(3) 0 - 45 wt.% of an unblocked or blocked di-, tri- or polyisocyanate and
(4) optionally conventional emulsifiers,
wherein said preparations (Zu) are free from waxes and wax mixtures.

2. Use of the preparations according to claim 1 as a finish on fabrics.

3. Use of the preparations according to claim 2 on textile fabrics, wherein the finishing takes place by forced application or in an exhaust process.

4. Use of the preparations according to claim 2 on textile fabrics, wherein the application takes place by means of spraying or by brush or sponge application.

5. Use of the preparations according to claim 2 on textile fabrics, wherein the application takes place from organic solvents in an impregnation or dipping process or by spray methods.

6. Use of the preparations according to claim 3 on textile fabrics, wherein the finishing takes place as an after-treatment of washed textiles.

## Revendications

1. Préparations (Zu) à base d'eau et/ou de solvants organiques, **caractérisées par** la teneur en composants individuels suivants :
(1) 10 à 90 % en poids d'un agent oléofuge et hydrofuge contenant du fluor,
(2) 10 à 80 % en poids d'un produit de conversion hydrophobe (S) pouvant être obtenu par conversion d'un composant (A) de formule (I) 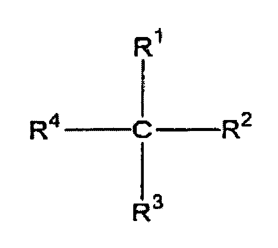 et/ou de formule (II) 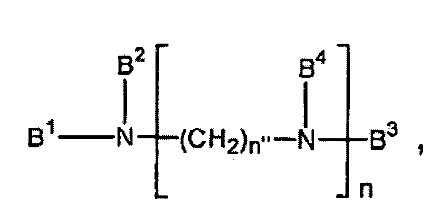 dans laquelle R¹ est un radical hydrophobe présentant la signification -X-Y-Z ou -Z, dans laquelle
X = -(CH₂)ₙ"- ,
Y = 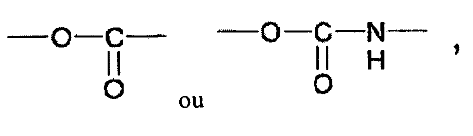 Z = -(CH₂)_{m'}-CH₃
R² est un radical de la composition 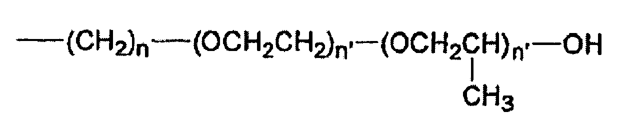 R³ est un radical hydrophobe présentant la signification -X-Y-Z, -Z ou -Y-Z, à condition que, dans le cas de la signification -Y-Z, n soit alors remplacé par n" dans le radical R²,
R⁴ est un radical présentant la signification -X-Y-Z ou -(CH₂)ₙ'H,
B¹ est un radical hydrophobe présentant la signification -V-W-Z ou -Z, dans lequel
V est 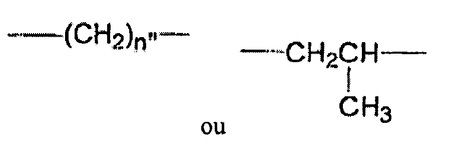 W = 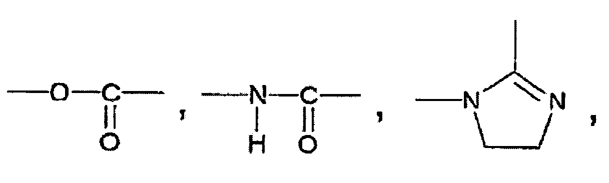 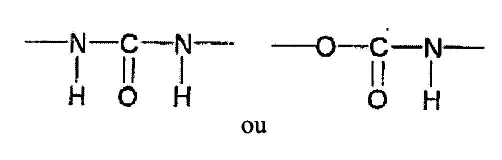 B² = 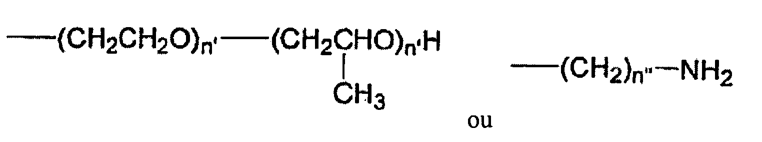 B³ = un radical hydrophobe présentant la signification -V-W-Z, -Z ou 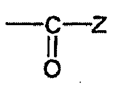 B⁴ = -V-W-Z ou 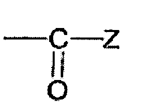 n, n', n", m et m' sont des nombres entiers présentant les valeurs suivantes
n = 0-2,
n' = 0-4,
n" = 1 - 4,
m = 3-11 et
m' = 12-26,
avec des di-, tri- ou poly-isocyanates non bloqués ou partiellement bloqués (IC), la proportion de groupes NCO libres étant entre 1,8 et 10 par mole et le rapport des groupes NCO libres aux groupes réactionnels des composés de formules (I) et/ou (II) étant de 1:1 à 1:1,3,
(3) 0 à 45 % en poids d'un di-, tri- ou polyisocyanates non bloquant ou bloquant et
(4) éventuellement, des émulsifiants habituels,
les préparations citées (Zu) étant dépourvus de cires et de mélanges de cires.

2. Utilisation des préparations selon la revendication 1 comme apprêt sur les surfaces.

3. Utilisation des préparations selon la revendication 2 sur des surfaces textiles, l'apprêt s'effectuant par application forcée ou par un procédé d'étirage.

4. Utilisation des préparations selon la revendication 2 sur les surfaces textiles, l'application s'effectuant par pulvérisation, application au pinceau ou à l'éponge.

5. Utilisation des préparations selon la revendication 2 sur des surfaces textiles, l'utilisation s'effectuant à partir de solvants organiques dans un procédé d'imbibage ou d'immersion ou par des procédés de pulvérisation.

6. Utilisation des préparations selon la revendication 3, sur des surfaces textiles, l'apprêt s'effectuant en tant que post-traitement de textiles lavés.
